# NEUE EUROPÄISCHE PATENTSCHRIFT

(11) **EP 2 177 681 B2**
(45) Veröffentlichungstag und Bekanntmachung des Hinweises auf die Entscheidung über den Einspruch: **14.10.2020**
(45) Hinweis auf die Patenterteilung: 30.11.2016
(21) Anmeldenummer: 09013038.6
(22) Anmeldetag: 15.10.2009
(51) Int. Cl.: C04B 26/10, C04B 28/02, C04B 111/10, C04B 111/28, E04B 1/00, E04B 1/76

(54) **Beton-Baustoff, Bauelement zur Wärmedämmung und mauersteinförmiges Wärmedämmelement, jeweils unter Verwendung des Beton-Baustoffs**
Concrete material, component for heat insulation and masonry-form heat insulation element, all using concrete material
Matériau de construction en béton, élément de construction pour l'isolation thermique et élément d'isolation thermique en forme de pierre taillée, en utilisant toujours le matériau de construction en béton

(30) Priorität: 17.10.2008 EP 08018227
(43) Veröffentlichungstag der Anmeldung: 21.04.2010
(73) Patentinhaber: SCHÖCK BAUTEILE GmbH, 76534 Baden-Baden (DE)
(72) Erfinder:
(74) Vertreter: Lemcke, Brommer & Partner Patentanwälte Partnerschaft mbB

(56) Entgegenhaltungen:
- EP-A1- 1 932 814
- EP-A2- 1 596 018
- EP-B1- 0 186 466
- EP-B1- 1 171 398
- EP-B1- 1 368 283
- EP-B1- 2 190 798
- WO-A1-2004/022504
- DE-A1- 1 646 883
- DE-A1- 2 043 747
- DE-A1- 10 213 712
- DE-T2- 69 006 270
- DE-U1-202008 010 803
- US-A- 3 645 916
- US-B1- 6 221 152
- SAKR K ET AL: "Effect of high temperature or fire on heavy weight concrete properties", CEMENT AND CONCRETE RESEARCH, PERGAMON PRESS, ELMSFORD, NY, US, Bd. 35, 1. Januar 2005 (2005-01-01), Seiten 590-596, XP002513640, ISSN: 0008-8846, DOI: 10.1016/J.CEMCONRES.2004.05.023 [gefunden am 2004-01-01]
- MAKARIOUS A S ET AL: "ON THE UTILIZATION OF HEAVY CONCRETE FOR RADIATION SHIELDING", ANNALS OF NUCLEAR ENERGY, PERGAMON PRESS, OXFORD, GB, vol. 23, no. 3, 1 March 1996 (1996-03-01), pages 195-206, XP007922139, ISSN: 0306-4549
- EISSA N A ET AL: "Mössbauer study of ilmenite-limonite concrete for nuclear reactor shield", HYPERFINE INTERACTIONS, SPRINGER, vol. 29, no. 1-4, 1 February 1986 (1986-02-01), pages 1483-1486, XP009171787, ISSN: 0304-3843
- J. SCHUBERT et al.: "Ultrahochfester Beton - der Werkstoff fur das neue Schöck Isokorb-Drucklager", FRILO-Magazin, 2003, pages 21-24,
- E. FEHLING et al.: "Ultra High Performance Concrete (UHPC)", Proceedings of the Second International Symposium on Ultra High Performance Concrete, 5 March 2008 (2008-03-05), pages 1, 2, VI, VII, 425-432 und 589 bis 595, Kassel, Germany ISBN: 978-3-89958-376-2
- W. WIMMENAUER: "Petrographie der magmatischen und metamorphen Gesteine", 1985, Stuttgart ISBN: 978-3-43294-671-9 page 196 und 197,
- E. FEHLING et al.: "Entwicklung, Dauerhaftigkeit und Berechnung ultrahochfester Betone (UHPC)", Forschungsbericht DFG FE 497/1-1, 2005, pages S. 1-15 und S. 96 bis 105, ISBN: 3-89958-108-3
- M. SCHMIDT et al.: "Fügen von Bauteilen aus UHPC durch Kleben", Beton- und Stahlbetonbau, vol. 102, 2007, pages 681-690,
- K. WALZ: "Über die Herstellung von Beton höchster Festigkeit", Beton, vol. 16, no. 8, 1966, pages 339-340,
- M. SCHMIDT et al.: "Ultra-Hochfester Beton", Planung und Bau der ersten Brücke mit UHPC in Europa, 2003, pages II-IV und S. 5 bis 8, ISBN: 3-89958-518-6
- J. FALBE et al.: "Römpp Chemie Lexikon", 1998, Stuttgart ISBN: 3-13-102759-2 pages 3946-3957,
- Versuchsbericht der Bauhaus-Universität Weimar, RA. Finger Institut für Baustoffkunde
- Norm DIN EN 206-1:2000;
- 'The Definition Of A Mineral: Can. Min., Vol.33. 689-690'
- Römpp. Chemie Lexikon; Georg Thieme Verlag: Auflage 1992: Band T-Z; Seiten 4626-4628
- Auszug Titanate und Kaliumtitanat aus Wikipedia, abgerufen am 300719 (vgl. https://de.wikipedia.org/wiki/Kaliumtitano xid: und https://de.wikipedia.org/wiki/Titanate).

## Beschreibung

Die Erfindung betrifft ein Bauelement zur Wärmedämmung gemäß dem Oberbegriff von Anspruch 1 und außerdem ein mauersteinförmiges Wärmedämmelement zum Einsatz im Mauerfußbereich zwischen einer Decken- oder Bodenplatte und einer aufgehenden Gebäudewand gemäß dem Oberbegriff von Anspruch 7.

Aus der EP-A 1 225 283 ist ein Bauelement zur Wärmedämmung zwischen zwei Bauteilen bekannt, das neben einem Isolierkörper auch Druckkraft übertragende und an beide Bauteile angeschlossene Druckelemente aufweist, die aus hochfestem Beton bestehen. Die Verwendung von hochfestem Beton in diesem statisch und auch wärmetechnisch sehr wichtigen Bereich hat sich in der jüngsten Zeit immer stärker durchgesetzt und begonnen, die bis dahin üblichen Edelstahldruckelemente abzulösen, wobei auch die gestiegenen Stahlpreise zu diesem Trend beigetragen haben.

Der hierbei Verwendung findende hochfeste Beton ist üblicherweise aus etwa einem Drittel Zement, einem Drittel Quarzsand, einem Sechstel Basalt sowie Mikrosilika in der Größenordnung von etwa 5 %, Wasser in der Größenordnung von etwa 10 % und einem Fließmittelanteil in der Größenordnung von etwa 1,5 % zusammengesetzt, wobei die Prozentangaben auf die Masse des Betons bezogen sind. Wärmetechnische Untersuchungen haben nun ergeben, dass im genannten Bereich zwischen zwei Bauteilen das vorliegend aus Beton bestehende Druckelement immer noch eine Schwachstelle in Wärmeentkopplungshinsicht darstellen.

Sakr, K. und EI-Hakim, E. ("Effect of high temperature or fire on heavy weight concrete properties"; Cement and Concrete Research 35 (2005) 590-596) beschreiben die Verwendung von Ilmenit-Beton zur Herstellung eines Baustoffes, der resistent ist gegen hohe Temperaturen und Feuer sowie dessen Verwendung beim Bau von Kernkraftwerken.

In der US 3,645,916 A wird ein metallischer Mörtel beschrieben, der Eisenerz enthält und ebenfalls zum Bau von Kernkraftwerken geeignet ist.

In Ann. Nucl. Energy Vol. 23, No. 3, pp. 195-206, 1996 wird in einem Beitrag "ON THE UTILIZATION OF HEAVY CONCRETE FOR RADIATION SHIELDING" von A.S. Makarious et al. ein Ilmenit-Beton zur Abschirmung gegen Strahlung beschrieben.

In Hyperfine Interactions 29 (1986) 1483-1486 wird unter dem Titel "MÖSSBAUER STUDY OF ILMENITE-LIMONITE CONCRETE FOR NUCLEAR REACTOR SHIELD" von N.A. Eissa et al. ein Ilmenit-Limonit-Beton zur Verwendung als Abschirmung in Kernkraftwerken beschrieben.

Somit liegt der vorliegenden Erfindung die Aufgabe zugrunde, von diesen Erkenntnissen ausgehend ein Bauelement zur Wärmedämmung sowie ein mauersteinförmiges Wärmedämmelement der eingangs genannten Art zur Verfügung zu stellen, die sich durch bessere Wärmedämmeigenschaften auszeichnen, ohne dass sie wesentliche Einbußen hinsichtlich ihrer Trageigenschaften aufweisen.

Diese Aufgabe wird sowohl bei dem Bauelement zur Wärmedämmung der eingangs genannten Art als auch bei dem mauersteinförmigen Wärmedämmelement der eingangs genannten Art erfindungsgemäß dadurch gelöst, dass der Beton dadurch als Wärmedämm-Trag-Baustoff ausgebildet ist, dass er Titan-Minerale als Zusatzstoff enthält und dass der Beton einen Massenanteil von Quarzsand in der Größenordnung von weniger als 10% aufweist und dass die als Zusatzstoff für den hochfesten Beton fungierenden Titan-Minerale aus Ilmenit bestehen und einen Volumenanteil am Beton in der Größenordnung von etwa einem Drittel und/oder einem Massenanteil in der Größenordnung von etwa 50% oder mehr aufweisen. Diese Titan-Minerale, die aus Ilmenit bestehen, zeichnen sich dadurch aus, dass sie gegenüber sonst üblichen Zuschlagstoffen und beispielsweise gegenüber Quarzsand eine beispielsweise um etwa 100 % höhere Dichte aufweisen - aus diesem Grunde waren sie auch schon einmal in den 70er Jahren als Zuschlagstoff für den Strahlenschutz, beispielsweise in Betonbauteilen von Kernkraftwerken eingesetzt worden, danach aber wieder in Vergessenheit geraten. Aus diesem Grunde wird das abgebaute Ilmenit schon seit Jahrzehnten überwiegend nur noch zur Herstellung von Farben verwendet; denn Titandioxid weist eine extrem hohe "Weißkraft" auf und ist das wichtigste Weißpigment in Anstrichmitteln - und ist außerdem wegen seiner Ungiftigkeit noch als Lebensmittelzusatz E171 zugelassen. Das heißt, die Verwendung als Beton-Zuschlagstoff für den Strahlenschutz spielt bei den Abbaumengen von Ilmenit keine spürbare Rolle (mehr).

Es hat sich nun überraschenderweise herausgestellt, dass sich durch die Titan-Minerale und insbesondere durch Ilmenit aber nicht nur die Festigkeit, sondern vor allem auch die Wärmedämmeigenschaften des hochfesten Betons deutlich verbessern lassen, in einem Beispielfall um 50 %. Wenn man somit die sonst üblichen Zuschlagstoffe wie insbesondere Quarzsand hinsichtlich ihres Anteils im Beton reduziert auf weniger als 10 % und insbesondere auf einen Anteil nahe oder gleich Null, so kann man Titan-Minerale und insbesondere Ilmenit als Ersatz-Zusatzstoff einsetzen, erhält dabei insbesondere bessere Wärmedämmeigenschaften und sogar eine größere Festigkeit, ohne dass es zu sonstigen nachteiligen Effekten kommt.

Bei Vergleichstests (Zweiplattenverfahren) zwischen einem bekannten repräsentativen mikrostahlfaserbewehrten Hochleistungsfeinbeton (REF) und dem erfindungsgemäßen Ilmenit-Beton (ILM) ergaben sich in Anlehnung an DIN EN 12664 durchschnittlich etwa folgende Verhältnisse bzw. Unterschiede:

| | |
|---|---|
| Wärmestromdichte REF: | 220 ^{W}/ₘ₂ |
| Wärmestromdichte ILM: | 140 ^{W}/ₘ₂ |
| Wärmedurchlasswiderstand R_{REF}: | 0,02 ^{m3K}/_{W} |
| Wärmedurchlasswiderstand R_{ILM}: | 0,03 ^{m2K}/_{W} |
| Wärmeleitfähigkeit λ_{REF}: | 1,5 ^{W}/_{(m·K)} |
| Wärmeleitfähigkeit λ_{ILM}: | 0,9 ^{W}/_{(m·K)} |

Eine vorteilhafte Betonzusammensetzung besteht somit beispielsweise daraus, dass die Titan-Minerale eine Korngröße von maximal 0,5 mm aufweisen, wie es an sich für hochfeste Betone hinsichtlich anderer Zuschlagstoffe bekannt ist, jedoch für den Abbau von Titan-Mineralen unüblich ist (normalerweise liegt die handelsübliche maximale Korngröße bei etwa 5 mm). Vorteile ergeben sich außerdem dadurch, dass man Titan-Minerale verschiedener Körnung verwendet, d.h. die Titan-Minerale sowohl als Grobzuschlag als auch als Feinzuschlag einsetzt, wobei der Volumen- und/oder Masseanteil des Grobzuschlags vorteilhafterweise im Wesentlichen doppelt so groß wie der Anteil des Feinzuschlags ist.

Die vorliegende Erfindung lässt sich nicht nur bei herkömmlichem zementgebundenem Beton verwenden, sondern auch bei Betonen, die ohne Zement auskommen bzw. zumindest auch andere Bindemittel aufweisen.

So werden bei so genanntem Polymerbeton, auf den sich die vorliegende Erfindung ausdrücklich auch erstrecken soll, Reaktionsharze (z.B. Polyester, Vinylester, Polyurethan-, Epoxid- oder MMA-Harz) als Bindemittel verwendet, um die Zuschlagsstoffe zusammenzuhalten. Zement wird hierbei nur als ein weiterer Füllstoff (zur Erweiterung der Gesteinskörnung) eingesetzt und übernimmt primär keine Bindewirkung. Maßgebend ist, dass die Reaktionsharze die gleichen Aufgaben wie der Zementleim bei herkömmlichem Beton übernehmen.

Als Füllstoffe können bei Polymerbeton sämtliche Bestandteile der herkömmlichen Betonmischungen dienen (z.B. Basaltmehl, Mikrosilika, Zement, Flugasche). Auch hier wird durch den Einsatz von Ilmenit in Kombination mit Mikrosilika und Zement eine Optimierung der Wärmeleitfähigkeit bei gleichzeitiger Festigkeitszunahme von bis zu 180 N/mm2 erzielt. Der Anteil an Reaktionsharz variiert hierbei zwischen etwa 18 und 35 Vol.-%. Der restliche Anteil an Füllstoffen beträgt zwischen etwa 65 und 82 Vol.%. Der maximale Größtkorndurchmesser liegt dabei in der Größenordnung von zwischen 0,1 und 0,5 mm. Somit kann der Beton in seiner Funktion als Kraft übertragendes Element z.B. bei Kragplattenanschlüssen auch zusätzlich zur Optimierung der Wärmeleitfähigkeit beitragen, ohne hierdurch Verluste bezüglich der Festigkeit hinnehmen zu müssen. Ein weiterer Vorteil des Polymerbetons aus den genannten Polymerbeton-Ausgangsstoffen und Ilmenit ist die Zunahme der Biegezugfestigkeit um beispielsweise bis zu 40 N/mm2. Die Biegezugfestigkeit ist ein Maß für die Stabilität des Gefüges des Werkstoffes. Somit liegt dieser Wert deutlich oberhalb der Werte für herkömmliche Betone und Hochleistungsbetone aus Zementleim.

Beim Einsatz von keramischen Hohlkugeln (sog. E-Spheres) und Mikroglashohlkugeln mit einer Partikelgröße von z.B. max. 0,3 mm können die Betonprodukte, beispielsweise die Druckkraftelemente, noch weiter optimiert werden. Hierbei wird ein Anteil des Ilmenits durch keramische Hohlkugeln ersetzt.

Durch die Herstellung von Polymerbeton mit Füllstoffen bis einer beispielhaften Größtkorngröße von bis zu 0,5 mm und einem Harzanteil von etwa zwischen 18 und 35 Vol.% (10 - 50%) können somit hohe Druckfestigkeiten, hohe Biegezugfestigkeiten bei geringen Wärmeleitfähigkeiten erreicht werden, welche in ihrer Funktion zur Optimierung des Betonprodukts, also z.B. der Druckelemente führen.

Werden dem Beton noch Fasern, insbesondere Stahlfasern beigemischt, so sorgt dies für die benötigte und gewünschte Duktilität, ohne die der hochfeste Beton im genannten Anwendungsgebiet nicht optimal einsetzbar wäre.

Betrachtet man sich die neue Betonzusammensetzung und deren besonderen Vorteile in wärmetechnischer und Tragfähigkeitshinsicht, so bieten sich unterschiedliche Verwendungsarten für diesen erfindungsgemäßen Beton-Baustoff an:
Die Verwendung als Betondruckelement für die genannten Bauelemente zur Wärmedämmung zwischen zwei Gebäudeteilen wurde vorstehend bereits angedeutet. Die vorliegende Erfindung soll sich ausdrücklich auch auf ein Bauelement zur Wärmedämmung mit Beton-Druckelement erstrecken, wie es grundsätzlich in der EP-A 1 225 283 beschrieben ist, auf deren Inhalt hier ausdrücklich Bezug genommen wird, jedoch mit der wesentlichen Weiterentwicklung, dass dabei anstatt eines "normalen" hochfesten Betons der erfindungsgemäße Wärmedämm-Trag-Baustoff verwendet wird, der Titan-Minerale als Zusatzstoff aufweist, wobei die Titan-Minerale aus Ilmenit bestehen. Dadurch dass bei einem solchen Bauelement zur Wärmedämmung das Druckelement, über das die Druckkräfte zwischen den beiden angrenzenden Gebäudeteilen übertragen wird, aus dem erfindungsgemäßen Beton-Baustoff besteht, lassen sich erfindungsgemäß die Wärmedämmeigenschaften im Vergleich zu den bekannten Bauelementen zur Wärmedämmung, deren Druckelemente aus herkömmlichem hochfesten Beton oder aus Edelstahl bestehen, wesentlich verbessern und das ohne Nachteile hinsichtlich des Tragverhaltens. Auch die in den Unteransprüchen aufgeführten vorteilhaften Weiterbildungen des erfindungsgemäßen Beton-Baustoffs lassen sich für vorteilhafte Ausgestaltungen des Bauelements zur Wärmedämmung heranziehen.

Darüber hinaus lässt sich der neue Beton-Baustoff auch als Tragelement für ein mauersteinförmiges Wärmedämmelement zur Wärmeentkopplung zwischen Wandteilen und Boden- oder Deckenteilen gemäß Patentanspruch 7 verwenden, wie es an sich aus der EPA 1 231 329 bekannt ist, auf deren Inhalt hier ausdrücklich Bezug genommen wird. Bei diesen mauersteinförmigen Wärmedämmelementen erfolgt der Aufbau durch kraftübertragende Tragelemente einerseits und Isolierelemente andererseits, wobei bisher die Tragelemente aus Leichtbeton, Leichtmörtel oder Kunststoff bestanden. Wird nun statt dessen der neue hoch wärmedämmende Beton-Baustoff verwendet, so lässt sich erfindungsgemäß das Tragverhalten dieses daraus bestehenden Tragelements verbessern und folglich dessen Dimensionierung auch an die verbesserten Festigkeitswerte anpassen. Hierdurch kann beispielsweise der Isolierelementanteil vergrößert und somit die Wärmeentkopplungseigenschaften weiter verbessert werden. Auf eine solche Verwendung des Beton-Baustoffs und das so hergestellte mauersteinförmige Wärmedämmelement soll sich die vorliegende Erfindung ebenfalls ausdrücklich erstrecken, wobei auch die in den Unteransprüchen aufgeführten Merkmale vorteilhafte Weiterbildungen des mauersteinförmigen Wärmedämmelementes darstellen.

Daneben ist es auch möglich, den neuartigen Beton-Baustoff überall dort zu verwenden, wo eine Wärmedämmung besonders wichtig ist, so beispielsweise im Anschlussbereich von Decken oder Bodenplatten an Stützen, wie sie zum Beispiel bei einem auf Stützen aufgelagerten Gebäude eingesetzt werden. Dort lässt sich der sonst in diesem Bereich verwendete Ortbeton durch den neuartigen Beton-Baustoff ersetzen, wodurch man die Wärmedämmung in diesem Bereich erheblich vergrößert bzw. verbessert.

Weitere Merkmale und Vorteile der vorliegenden Erfindung ergeben sich aus den beigefügten Ansprüchen, auf die hiermit ausdrücklich Bezug genommen werden soll, und aus den nachfolgenden Beschreibungen zweier Ausführungsbeispiel anhand der Zeichnung; hierbei zeigen
- Figur 1: ein erfindungsgemäßes Bauelement zur Wärmedämmung mit einem aus einem Beton-Baustoff bestehenden Betondruckelement; und
- Figur 2: ein erfindungsgemäßes mauersteinförmiges Wärmedämmelement mit einem aus einem Beton-Baustoff bestehenden Tragelement.

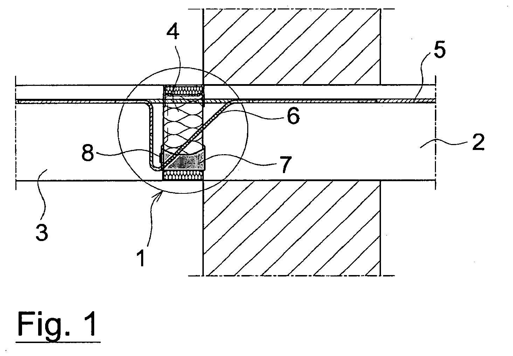

In Figur 1 ist ein Bauelement 1 zur Wärmedämmung dargestellt, das zwischen einem tragenden Bauteil 2 in Form einer Gebäudedeckenplatte und einem getragenen Bauteil 3 in Form einer Balkonplatte angeordnet ist. Das Bauelement 1 zur Wärmedämmung besteht hierzu aus einem Isolierkörper 4 sowie Bewehrungselementen, die zur Kraft- und Momentenübertragung zwischen den beiden Bauteilen dienen und im vorliegenden Fall aus in horizontaler Richtung verlaufenden Stahl-Zugstäben 5 bestehen sowie aus geneigt durch den Isolierkörper 4 verlaufenden Stahl-Querkraftstäben 6 und aus an beide Bauteile 2, 3 angeschlossenen Beton-Druckelementen 7.

Die Beton-Druckelemente 7 schließen etwa bündig mit dem Isolierkörper 4 bzw. dem Gesamt-Bauelement 1 ab und stehen somit nur kaum in die Beton-Bauteile 2, 3 vor, an die sie flächig mit ihren endständigen Stirnseiten anliegen. Sie sind zumindest an diesen den Bauteilen zugewandten Stirnseiten mit einer Kunststoff-Gleitschicht abgedeckt, wobei im vorliegenden Beispiel die Kunststoff-Gleitschicht aus einer das Beton-Druckelement zumindest seitlich umgebenden verlorenen Gießform 8 besteht, in die das Beton-Druckelement 7 bei dessen Herstellung eingefüllt wird und mit der das Betondruckelement zusammen in das Bauelement 1 eingebaut wird.

Da das Bauelement 1 zur Wärmedämmung nicht nur statische bzw, dynamische, sondern vor allem wärmetechnische Aufgaben erfüllen muss, steht die Wärmedämmeigenschaft mit im Vordergrund. Hierbei stellen die Beton-Druckelemente 7 aufgrund ihres vergleichsweise großen Flächenanteils einen durchaus wichtigen Bereich dar, der durch die vorliegende Erfindung weiter optimiert wird: Hierzu wird ein hochfester Beton verwendet, der in erfindungsgemäßer Art und Weise Ilmenit als Zuschlagsstoff aufweist und dagegen ganz auf den sonst üblichen Quarzsand verzichtet. Dadurch wird aufgrund der höheren Dichte von Ilmenit gegenüber Quarzsand nicht nur die Festigkeit des Betondruckelements 7 verbessert, sondern vor allem wird in besonders vorteilhafter Weise die Wärmeleitfähigkeit deutlich reduziert, was insbesondere zu einer Verbesserung der Wärmedämmung des so ausgestatteten Bauelements 1 beiträgt. Ein besonderer Vorteil liegt auch darin, dass der erfindungsgemäße Beton-Baustoff einfach dazu verwendet werden kann, die sonst üblichen hochfesten Betone zu ersetzen, ohne dass dies zu irgendwelchen Nachteilen führt.

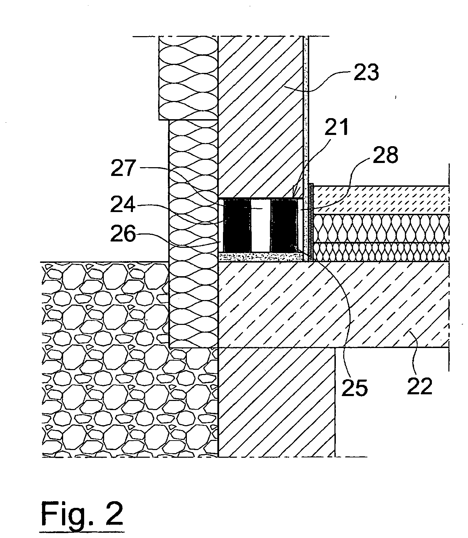

In Figur 2 ist ein mauersteinförmiges Wärmedämmelement 21 dargestellt, das auf einer Betonbodenplatte 22 ruht und das wiederum eine Gebäudewand 23 trägt. Somit bildet das mauersteinförmige Wärmedämmelement 21 im so genannten Mauerfuß einen Entkopplungsbereich, um etwaige von der Betonbodenplatte 22 aufsteigende Kälte von der Gebäudewand 23 fernzuhalten. Das Wärmedämmelement 21 besteht dabei im gezeigten Beispiel aus zwei balkenförmigen Tragelementen 24, 25 und aus einem diese Tragelemente umgebenden Isolierelement mit den Abschnitten 26, 27, 28.

Erfindungsgemäß besteht nunmehr jedes der beiden Tragelemente 24, 25 aus dem neuartigen Beton-Baustoff, der als Wärmedämm-Trag-Baustoff ausgebildet ist, indem der sonst übliche Quarzsand vollständig durch Ilmenit ersetzt ist. Es versteht sich von selbst, dass die Tragelemente unterschiedliche Form aufweisen können; wesentlich ist dabei, dass sie ein flächen- bzw. volumenreduziertes bzw. skelettartiges Traggerüst darstellen und dass die restlichen Bereich der so gebildeten Mauersteinform durch Isoliermaterial ausgefüllt werden können.

Wie vorstehend bereits erwähnt, lässt sich der neue Beton-Baustoff in verschiedensten Bereichen des Betonbaus einsetzen, wo man die Wärmedämmung verbessern möchte. Da natürlich ein solcher Beton etwas teurer ist als ein normaler Ortbeton, kann man hierzu den neuen hochfesten Beton auf diejenigen Bereiche beschränken, die wärmeoptimiert werden sollen, wozu man entweder den hochfesten Beton - wie beim genannten Bauteil zur Wärmedämmung - vorfertigen und so als Fertigelement weiterverarbeiten kann oder indem man beim Vergießen des hochfesten Betons auf der Baustelle mit einer Schalung arbeitet, die dann nach dem Abbinden des hochfesten Betons entfernt wird, woraufhin dann der kostengünstigere Ortbeton gegen diesen hochfesten Beton gegossen werden kann.

Zusammenfassend schlägt die vorliegende Erfindung einen Beton-Baustoff vor, der Titan-Minerale bestehend aus Ilmenit als Zusatzstoff enthält und damit als neuartiger besonders vorteilhafter Wärmedämm-Trag-Baustoff verwendet werden kann. Dieser Wärmedämm-Trag-Baustoff ist dazu in der Lage, die Funktion verschiedener Bauteile zu verbessern, so zum Beispiel eines Bauelements zur Wärmedämmung gemäß den Ansprüchen 1 bis 6 oder eines mauersteinförmigen Wärmedämmelements gemäß den Ansprüchen 7 bis 12. Beton wurde zwar bisher auch schon für derartige Elemente verwendet. Aber die Verwendung von Titan-Mineralen bestehend aus Ilmenit als Zusatzstoff - das bisher nur für völlig gattungsfremde Betone eingesetzt wurde - ermöglicht einen Beton einer völlig neuen Kategorie, der nicht nur hochfest ist, sondern auch völlig überraschende bisher noch nicht dagewesene Wärmedämmeigenschaft aufweist.

## Patentansprüche

1. Bauelement zur Wärmedämmung zwischen zwei Betonbauteilen (2, 3), wobei das Bauelement (1) einen Isolierkörper (4) aufweist sowie an beide Betonbauteile anschließbare Bewehrungselemente (5, 6, 7) zur Kraft- und/oder Momentenübertragung zwischen den beiden Bauteilen, wobei eines der Bewehrungselemente als Druckelement (7) zur Druckkraftübertragung ausgebildet und hierzu an die beiden Betonbauteile angeschlossen ist und aus hochfestem als Wärmedämm-Trag-Baustoff ausgebildeten Beton besteht,
**dadurch gekennzeichnet,**
**dass** der Beton Titan-Minerale als Zusatzstoff enthält und dass der Beton einen Massenanteil von Quarzsand in der Größenordnung von weniger als 10% aufweist und **dass** die als Zusatzstoff für den hochfesten Beton fungierenden Titan-Minerale aus Ilmenit bestehen und einen Volumenanteil am Beton in der Größenordnung von etwa einem Drittel und/oder einen Massenanteil in der Größenordnung von etwa 50% oder mehr aufweisen.

2. Bauelement zur Wärmedämmung nach Anspruch 1,
**dadurch gekennzeichnet,**
**dass** der hochfeste Beton ein Beton der Festigkeitsklasse C55 oder höher ist.

3. Bauelement zur Wärmedämmung nach zumindest Anspruch 1,
**dadurch gekennzeichnet,**
**dass** der hochfeste Beton einen Massenanteil von Quarzsand in der Größenordnung von nahe oder gleich Null aufweist.

4. Bauelement zur Wärmedämmung nach zumindest Anspruch 1,
**dadurch gekennzeichnet,**
**dass** die als Zusatzstoff für den hochfesten Beton fungierenden Titan-Minerale eine Korngröße von maximal 0,5 mm aufweisen.

5. Bauelement zur Wärmedämmung nach zumindest Anspruch 1,
**dadurch gekennzeichnet,**
**dass** dem Beton Fasern, insbesondere Stahlfasern beigemischt sind.

6. Bauelement zur Wärmedämmung nach zumindest Anspruch 1,
**dadurch gekennzeichnet,**
**dass** der Beton unter Verwendung von zumindest Zement und/oder Reaktionsharz als Bindemittel hergestellt ist.

7. Mauersteinförmiges Wärmedämmelement (11) zum Einsatz im Mauerfußbereich zwischen einer Decken- oder Bodenplatte (22) und einer aufgehenden Gebäudewand (23), wobei das Wärmedämmelement zumindest ein aus einem Betonmaterial bestehendes Tragelement (24, 25) und zumindest einen das Tragelement seitlich umgebenden Isolierkörper (26, 27, 28) aufweist,
**dadurch gekennzeichnet,**
**dass** das Betonmaterial dadurch als Wärmedämm-Trag-Baustoff ausgebildet ist, dass es Titan-Minerale als Zusatzstoff enthält und dass das Betonmaterial einen Massenanteil von Quarzsand in der Größenordnung von weniger als 10% aufweist und **dass** die als Zusatzstoff für den hochfesten Beton fungierenden Titan-Minerale aus Ilmenit bestehen und einen Volumenanteil am Beton in der Größenordnung von etwa einem Drittel und/oder einen Massenanteil in der Größenordnung von etwa 50% oder mehr aufweisen.

8. Mauersteinförmiges Wärmedämmelement nach Anspruch 7,
**dadurch gekennzeichnet,**
**dass** das Betonmaterial aus hochfestem Beton der Festigkeitsklasse C55 oder höher besteht.

9. Mauersteinförmiges Wärmedämmelement nach zumindest Anspruch 8,
**dadurch gekennzeichnet,**
**dass** die als Zusatzstoff für den hochfesten Beton fungierenden Titan-Minerale eine Korngröße von maximal 0,5 mm aufweisen.

10. Mauersteinförmiges Wärmedämmelement nach zumindest Anspruch 8,
**dadurch gekennzeichnet,**
**dass** der hochfeste Beton einen Massenanteil von Quarzsand in der Größenordnung von nahe oder gleich Null aufweist.

11. Mauersteinförmiges Wärmedämmelement nach zumindest Anspruch 7,
**dadurch gekennzeichnet,**
**dass** dem Beton Fasern, insbesondere Stahlfasern beigemischt sind.

12. Mauersteinförmiges Wärmedämmelement nach zumindest Anspruch 7,
**dadurch gekennzeichnet,**
**dass** der Beton unter Verwendung von zumindest Zement und/oder Reaktionsharz als Bindemittel hergestellt ist.

## Claims

1. Structural element for thermal insulation between two concrete structural components (2, 3), the structural element (1) having an insulator body (4) and having reinforcing elements (5, 6, 7) which are connectible to both concrete structural components for transmission of force and/or moments between the two structural components, wherein one of the reinforcing elements is in the form of a compression element (7) for transmission of compressive force and for that purpose is connected to the two concrete structural components and consists of high-strength concrete in the form of a thermally insulating/load-bearing material,
**characterised in that**
the concrete containing titanium minerals as additive, and the concrete comprises quartz sand in a proportion by mass of the order of less than 10 % and that the titanium minerals acting as additive for the high-strength concrete consist of ilmenite and are present in the concrete in a proportion by volume of the order of approximately a third and/or in a proportion by mass of the order of approximately 50 % or more.

2. Structural element for thermal insulation according to claim 1,
**characterised in that**
the high-strength concrete is a concrete of strength class C55 or higher.

3. Structural element for thermal insulation according to at least claim 1,
**characterised in that**
the high-strength concrete comprises quartz sand in a proportion by mass of the order of close to or equal to zero.

4. Structural element for thermal insulation according to at least claim 1,
**characterised in that**
the titanium minerals acting as additive for the high-strength concrete have a particle size of a maximum of 0.5 mm.

5. Structural element for thermal insulation according to at least claim 1,
**characterised in that**
fibres, especially steel fibres, are admixed with the concrete.

6. Structural element for thermal insulation according to at least claim 1,
**characterised in that**
the concrete is produced using at least cement and/or reactive resin as binder.

7. Brick-shaped thermal insulation element (11) for use in the footing region between a ceiling or floor slab (22) and a rising wall (23) of a building, the thermal insulation element having at least one load-bearing element (24, 25) consisting of a concrete material and at least one insulator body (26, 27, 28) laterally surrounding the load-bearing element,
**characterised in that**
the concrete material is in the form of a thermally insulating/load-bearing material as a result of its containing titanium minerals as additive, and the concrete material comprises quartz sand in a proportion by mass of the order of less than 10 % and that the titanium minerals acting as additive for the high-strength concrete consist of ilmenite and are present in the concrete in a proportion by volume of the order of approximately a third and/or in a proportion by mass of the order of approximately 50 % or more.

8. Brick-shaped thermal insulation element according to claim 7,
**characterised in that**
the concrete material consists of high-strength concrete of strength class C55 or higher.

9. Brick-shaped thermal insulation element according to at least claim 8,
**characterised in that**
the titanium minerals acting as additive for the high-strength concrete have a particle size of a maximum of 0.5 mm.

10. Brick-shaped thermal insulation element according to at least claim 8,
**characterised in that**
the high-strength concrete comprises quartz sand in a proportion by mass of the order of close to or equal to zero.

11. Brick-shaped thermal insulation element according to at least claim 7,
**characterised in that**
fibres, especially steel fibres, are admixed with the concrete.

12. Brick-shaped thermal insulation element according to at least claim 7,
**characterised in that**
the concrete is produced using at least cement and/or reactive resin as binder.

## Revendications

1. Elément de construction pour l'isolation thermique entre deux parties (2, 3) d'une construction en béton, sachant que l'élément de construction (1) présente un corps isolant (4) ainsi que des éléments d'armature (5, 6, 7) pouvant être raccordés aux deux parties de construction en béton et destinés à la transmission de forces et/ou de couples entre les deux parties de construction, sachant qu'un des éléments d'armature est réalisé sous la forme d'un élément de pression (7) pour la transmission de forces de pression et, à cet effet, est raccordé aux deux parties de construction en béton et est constitué de béton à haute résistance réalisé sous la forme d'un matériau de construction porteur et d'isolation thermique, **caractérisé en ce que** le béton contient comme additif des minéraux à base de titane et que le béton présente une part de poids de sable quartzeux d'un ordre de grandeur inférieur à 10 % et que les minéraux à base de titane servant d'additif pour le béton à haute résistance consistent en de l'ilménite et représentent une part de volume du béton d'un ordre de grandeur d'environ un tiers et/ou une part de poids d'un ordre de grandeur d'environ 50 % ou davantage.

2. Elément de construction pour l'isolation thermique selon la revendication 1, **caractérisé en ce que** le béton à haute résistance est un béton de classe de résistance C55 ou supérieure.

3. Elément de construction pour l'isolation thermique selon au moins la revendication 1, **caractérisé en ce que** le béton à haute résistance présente une part de poids de sable quartzeux d'un ordre de grandeur presque égal ou égal à zéro.

4. Elément de construction pour l'isolation thermique selon au moins la revendication 1, **caractérisé en ce que** les minéraux à base de titane servant d'additif pour le béton à haute résistance présentent une grosseur de grain de 0,5 mm maximum.

5. Elément de construction pour l'isolation thermique selon au moins la revendication 1, **caractérisé en ce que** des fibres, en particulier des fibres d'acier, sont mélangées au béton.

6. Elément de construction pour l'isolation thermique selon au moins la revendication 1, **caractérisé en ce que** le béton est fabriqué en utilisant au moins du ciment et/ou une résine de réaction comme liant.

7. Elément d'isolation thermique (11) en forme de brique à utiliser dans la région de la base d'un mur entre une dalle de plafond ou de plancher (22) et une paroi de bâtiment verticale (23), sachant que l'élément d'isolation thermique présente au moins un élément porteur (24, 25) constitué de matériau à base de béton et au moins un corps isolant (26, 27, 28) entourant latéralement l'élément porteur,
**caractérisé en ce que** le matériau à base de béton est réalisé sous la forme d'un matériau de construction porteur et d'isolation thermique par le fait qu'il contient comme additif des minéraux à base de titane et que le matériau à base de béton présente une part de poids de sable quartzeux d'un ordre de grandeur inférieur à 10 % et que les minéraux à base de titane servant d'additif pour le béton à haute résistance consistent en de l'ilménite et représentent une part de volume du béton d'un ordre de grandeur d'environ un tiers et/ou une part de poids d'un ordre de grandeur d'environ 50 % ou davantage.

8. Elément d'isolation thermique en forme de brique selon la revendication 7, **caractérisé en ce que** le matériau à base de béton consiste en du béton à haute résistance de classe de résistance C55 ou supérieure.

9. Elément d'isolation thermique en forme de brique selon au moins la revendication 8, **caractérisé en ce que** les minéraux à base de titane servant d'additif pour le béton à haute résistance présentent une grosseur de grain de 0,5 mm maximum.

10. Elément d'isolation thermique en forme de brique selon au moins la revendication 8, **caractérisé en ce que** le béton à haute résistance présente une part de poids de sable quartzeux d'un ordre de grandeur presque égal ou égal à zéro.

11. Elément d'isolation thermique en forme de brique selon au moins la revendication 7, **caractérisé en ce que** des fibres, en particulier des fibres d'acier, sont mélangées au béton.

12. Elément d'isolation thermique en forme de brique selon au moins la revendication 7, **caractérisé en ce que** le béton est fabriqué en utilisant au moins du ciment et/ou une résine de réaction comme liant.
